# EUROPEAN PATENT SPECIFICATION

(11) **EP 2 050 330 B1**
(45) Date of publication and mention of the grant of the patent: **09.03.2011**
(21) Application number: 07118919.5
(22) Date of filing: 19.10.2007
(51) Int. Cl.: A01F 15/07

(54) **Bale wrapper for wrapping round bales**
Ballenwickler zur Wicklung runder Ballen
Enrubanneuse pour emballer des balles rondes

(43) Date of publication of application: 22.04.2009
(73) Proprietor: Usines CLAAS France S.A.S., 57148 St. Rémy/Woippy CEDEX (FR)
(72) Inventor: Hasse, Lionel, 57420 Solgne (FR)

(56) References cited:
- EP-A- 1 386 532
- DE-A1- 4 120 733
- US-A1- 2003 070 392

## Description

The invention relates to a bale wrapper for wrapping round bales that are made of hay, straw, silage or similar stalk-type products, according to the precharacterising part of claim 1.

Generic bale wrappers are known in agriculture and are used to improve the preservability and prolong the storage time of pressed round bales. Bale wrappers have been proposed that are either individually towable machines or separate machines which, when the round bales have been pressed, pick them from the field, wrap them with foil and then place them back onto the field. As an alternative, wrapping devices are known that can be coupled to a baler, which wrapping devices take the pressed and bound bales from the baler and wrap them. There is, however, a problem in that the position of the film rolls and the speed at which the film is wrapped around the bound bale are optimised only for a particular bale diameter, thus making film-saving wrapping of the bale possible only for one bale diameter. Furthermore, if the film roll is not centred on the horizontal rotary axis of the bale, this results in excessive pretension of the film at the beginning of the wrapping process, which can lead to the film slipping off the bale to be wrapped.

A round baler in combination with a bale wrapper is known, for example, from DE-A-41 20 733. In the machine for wrapping a bale with foil, which machine is described in the above patent specification, the main frame of said bale wrapper is rigidly connected to the bale press. The wrapping table itself comprises support rollers that are driven by a chain drive and that are arranged at little distance from the ground. For the purpose of wrapping the bale a swivel arm that accommodates a film roll and that is arranged on the supporting frame is disclosed. Variable adjustment of the swivel arm to different bale diameters is not possible.

A further press/wrapper combination is known from DE 100 44 166. The bale wrapper comprises a U-shaped wrapping arm, attached to a supporting frame, which wrapping arm at each end accommodates film dispensers for wrapping then bale. However, the wrapping arm shown in the above patent specification also does not disclose a variable adjustment option of the wrapping arm to handle different bale diameters.

From US 2003/0070392, a baler wrapper is known having a wrapping arm with variable horizontal and vertical position. In addition, the level of a wrapping table is variable. The vertical adjustment makes it prossible first to quickly wrap the top of the bale (which is the most instable part of the bale) before wrapping the rest of the bale until the bottom. The horizontal adjustment makes It possible on the one hand to wrap the bale in a first upright position on its circumferential surface, on the other hand to wrap the bale in a second lying position on its circumferential and end faces. For this purpose, the wrapping arm is moved horizontally. On both wrapping processes, the diameter of the bale has no influence.

It is thus the object of the invention to overcome the disadvantages of the cited prior art, and to propose a bale wrapper for wrapping bales, which bale wrapper makes possible wrapping of bales that Is optimised to various bale diameters and which results to film savings.

According to the invention, this object is met by the characterising features of claim 1, wherein the further claims disclose features which improve this solution In an advantageous manner.

According to the invention, the bale wrapper is characterised by at least one sensor that is equipped to generate information relating to the diameter of a bale that is present on the wrapping table and means for setting of the vertical and/or horizontal position of the wrapping arm, depending on the bale diameter of the bale that is present on the wrapping table for the purpose of being wrapped. By setting of the vertical and/or horizontal position of the wrapping arm it is ensured that optimal wrapping of bales of various diameters can be achieved. Moreover, by means of the setting of the position of the wrapping arm, of which there is at least one, which setting is made depending on the bale diameter, a film saving effect can advantageously be implemented by preventing bales of a small diameter from unintentionally being wrapped with too many film wrappings in the upper region, and by preventing bales of larger diameter from unintentionally being wrapped with too many film wrappings in the lower region.

In the simplest case, setting of the position of the wrapping arm, of which there is at least one, is such that the film centre of the film roll is situated on the horizontal rotary axis of the bale to be wrapped. When the film centre of the film roll is centred on the horizontal rotary axis of the bale, optimal wrapping of the bale is ensured, so that in particular any sliding off of the film as a result of excessive pretension and incorrect centring on the horizontal rotary axis of the bale can be prevented.

For precise setting of the vertical and/or horizontal position of the wrapping arm, of which there is at least one, the height and/or the width of the wrapping arm is settable. Preferably, in this arrangement the wrapping arm is designed to be horizontally and/or vertically telescoping so that adjusting the wrapping arm to various diameters of the bales to be wrapped can be achieved particularly precisely.

Preferably, the sensor is equipped to register In a non-contacting manner the position of the outer surface of the bale that is present on the wrapping table. Registering the bale to be wrapped provides concrete and reliable information relating to the respective bale diameter.

In a preferred embodiment of the invention the sensor used is an ultrasound distance meter. The use of other sensors that operate in a non-contacting manner, for example radar-, microwave- or laser distance meters is imaginable.

In a concrete embodiment of the invention, by means of an output signal generated by the sensor, of which there is at least one, in a control and evaluation unit, the diameter of the bale is determined so that the control and evaluation unit, corresponding to the output signal generated, determines the horizontal rotary axis of the bale that is present on the wrapping table, and transmits signals to suitable final control means arranged on the wrapping arm, so as to position the film centre of the film roll on the horizontal rotary axis of the bale that is present on the wrapping table. Advantageously this process takes place automatically so that on the one hand the operator of the bale wrapper has fewer tasks to concentrate on, and on the other hand optimal film-saving wrapping of the bale, matched to the diameter of each bale, is ensured. In order to improve the accuracy of the setting, setting advantageously takes place by means of an electronic linear motor or by means of a hydraulic cylinder.

In a further embodiment, the control and evaluation device that is present on the bale wrapper is equipped to receive an external signal to determine the diameter of the bale to be wrapped, so that, in particular, bale wrappers that are used as independent machines can adjust the positioning of the wrapping arm, of which there is at least one, or of the film centre of the film roll to the corresponding horizontal rotary axis of the bale to be wrapped. In particular, bales that have been deposited in the field and that are yet to be wrapped, can comprise a signal transmitter whose signal can be received by the bale wrapper.

Further exemplary embodiments are the subject of further subordinate claims and are explained in more detail below with reference to a drawing.

### The following is shown:

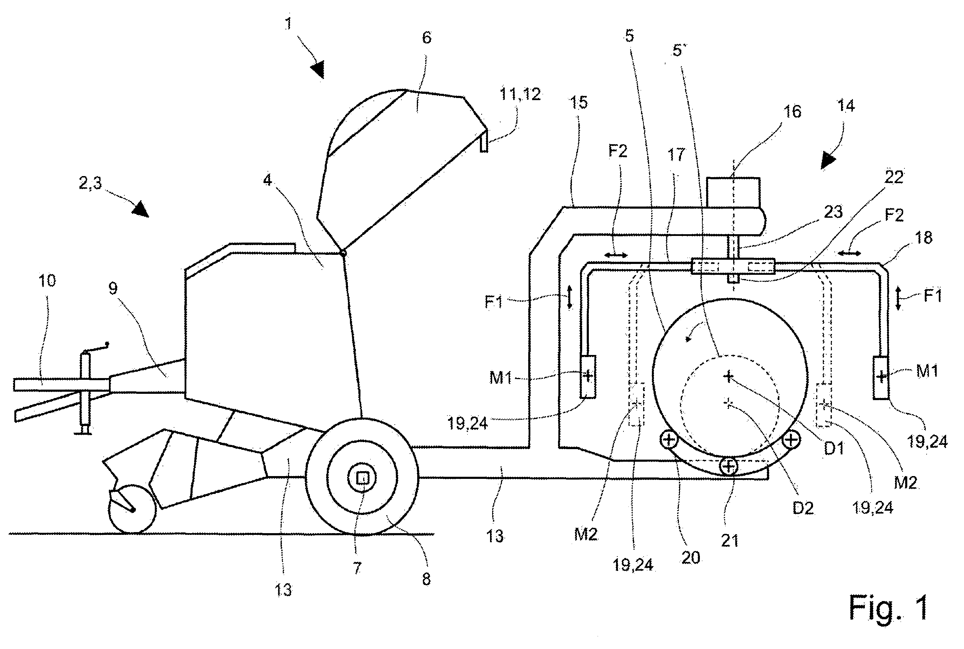

- Figure 1:: a diagrammatic side view of a baler/wrapper combination.

Fig. 1 shows a diagrammatic view of a baler/wrapper combination 1 that is pulled over the field by a tractor (not shown). As an example, in the present exemplary embodiment, the baler 2 is a round baler 3. The round baler 3 comprises a box-shaped housing 4 which accommodates the wrapping mechanism (not shown) for the bale 5, 5', and which in the rear region comprises a hingeable flap opening 6 to eject the wrapped bale 5, 5'. The housing 4 is held on a rear axle 7 on wheels 8 so that the device can be driven, wherein the housing 4 comprises laterally arranged longitudinal braces 9, which, further forward, converge with the drawbar 10. The round baler 3 comprises several conveyor elements, arranged side by side, which conveyor elements are known per se and are not shown in detail in the diagram. Said conveyor elements move during harvesting operations and enclose a bale 5, 5' that forms in the bale chamber, towards the front, top and rear The basic design and function of such a round baler are generally known. In this respect reference is made to DE 10 2004 033 252 A1.

At the top rear end of the flap opening 6, which has been hinged to a top end position, a sensor 11 is arranged, It is imaginable to have several sensors 11 arranged side by side spaced apart evenly across the width of the flap opening 6. The sensors 11 arranged across the width of the flap opening interact with the edge regions and the middle of the bale 5, 5' and are designed as ultrasound distance meters 12. The sensors 11 register the distance between their undersides and the conveyor elements (not shown) in the bale chamber, which conveyor elements rest directly against the external circumference of the bale 5, 5', In this way the sensors 11 provide information about the actual diameter of the bale 5, 5', Furthermore it is imaginable, instead of providing the ultrasound distance meter 12, to provide a mechanical sensor in the form of a feeler arm, attached to the flap opening 6, which feeler arm when the bale is ejected from the bale chamber establishes contact with the circumferential surface of the bale, with the excursion of said feeler arm making it possible to sense the bale diameter. A further embodiment provides for the sensors 11 to be connected by way of a bus line (not shown) to a control and evaluation unit (not shown) which drives a display device arranged in the driver's cabin of a tractor, where it informs the operator about the determined bale diameter. On the rear part of the round baler 3 the supporting frame 13 carries a bale wrapper 14. The bale wrapper 14 comprises an extension arm 15 which comprises a U-shaped beam 17, which is rotatably driven by means of a drive motor 16, with two wrapping arms 18, each of which accommodates a film dispensing device 19 at its end. Furthermore, the bale wrapper 14 comprises a wrapping table 20. On both sides and in the middle of the wrapping table 20 there are, for example, three wrapping rollers 21, which in longitudinal direction comprise several wrapping table belts (not shown in detail), onto which the bale 5, 5' comes to rest. The reference characters 5 and 5' designate bales of various diameters. The wrapping rollers 21 can be driven by way of a chain drive (not shown), which during the wrapping process ensures rotation of the bale 5, 5' over its circumference so that said bale 5, 5' can be wrapped across the entire running surface as well as the face surfaces, In this arrangement the wrapping process is such that the wrapping rollers 21 are driven, thus rotating the bale 5, 5', while at the same time the two opposite wrapping arms 18 with the film rolls 24 arranged on the film dispensing devices 19 are led around the bale 5, 5'.

Up to now the position of the wrapping arms 18, and thus the speed at which the film is wrapped around the tied bale 5, 5', has been optimised only for a particular bale diameter so that film-saving and reliable wrapping of a bale 5, 5' was only possible with a base bale diameter, A tendency towards increased use of round balers 3 with variable bale chambers, in which the diameter of the bale 5, 5' can be specified, and the resulting customer requirements for different bale diameters no longer allow optimal wrapping of bales 5, 5' other than those with the base bale diameter, wherein in particular in the case of bales 5, 5' with a very small bale diameter higher film use results, and there is the danger of the film sliding off the bale, in particular at the beginning of the wrapping process.

According to the invention, setting of the vertical and/or horizontal position of the wrapping arm 18, of which there is at least one, in relation to the bale 5, 5' to be wrapped, which bale 5, 5' is present on the wrapping table 20, takes place depending on the bale diameter. The respective diameter of the bale 5, 5' to be wrapped is determined in the control and evaluation unit (not shown) by means of the output signal generated by the sensor 11 that is located at the flap opening 6 of the round baler 3, so that in accordance with the generated output signal the control and evaluation unit determines the horizontal rotary axis D1, D2 of the bale 5, 5' that is present on the wrapping table 20.

As an alternative, at least one sensor 22 can be positioned directly on the bale wrapper 14, preferably on the underside of the wrapping arm 18 underneath its rotary axis 23 on the extension arm 15, so that in particular a bale wrapper 14 that is used as an independent machine provides the option of automatically determining the diameter of the bale 5, 5' that is to be wrapped. As soon as the respective horizontal rotary axis D1, D2 of the bale 5, 5' that is to be wrapped is sensed, the control and evaluation unit transmits corresponding signals to final control means (not shown in detail) that are arranged on the wrapping arms 18. Each wrapping arm 18 is adjustable in height F1 and in width F2 in order to position the film centre M1, M2 of the film rolls 24 on the horizontal rotary axis D1, D2 of the bale 5, 5' that is present on the wrapping table 20. Advantageously this process is automatic, It is imaginable that the bale diameter, and thus the horizontal rotary axis D1, D2 of the respective bale 5, 5' that is to be wrapped, is displayed to the operator of the bale wrappers 14 on a display and input device (not shown) which is preferably provided on the tractor that pulls the bale wrapper 14, with the operator, on the basis of this information, manually selecting the optimal setting of the bale wrapper 14. In order to make possible precise setting of the wrapping arms 18, in an embodiment that is not shown, the height F1 and the width F2 of said wrapping arms 18 can be telescopically settable, wherein setting preferably takes place by means of hydraulic cylinders (not shown) or by means of electric linear motors. Furthermore it is imaginable to design the extension arm 15 of the wrapping arms 18, the wrapping table 20 itself or the rotary axis 23 so that they are height-adjustable in order to achieve positioning, which positioning matches the respective bale diameter, of the wrapping arms 18 or of the film centre M1, M2 of the film rolls 24 in relation to the horizontal rotary axis D1, D2 of the bale 5, 5' that is to be wrapped. In a further embodiment of the invention the sensor 22 permanently senses the bale diameter during the wrapping process, If in this process a change in the bale diameter is determined by means of the control and evaluation unit, corresponding adjustment in the positioning of the film centre M1, M2 in relation to the horizontal rotary axis of the bale 5, 5' takes place so that an optimal wrapping process is permanency ensured.

It is within the ability of the average person skilled in the art to modify the exemplary embodiment described, in a manner that has not been shown, in order to achieve the described effects without thereby leaving the scope of the invention.

### List of reference characters:

- 1: Baler/wrapper combination
- 2: Baler
- 3: Round baler
- 4: Housing
- 5, 5': Bale
- 6: Flap opening
- 7: Axle
- 8: Wheels
- 9: Longitudinal braces
- 10: Drawbar
- 11: Sensor
- 12: Ultrasound distance meter
- 13: Supporting frame
- 14: Bale wrapper
- 15: Extension arm
- 16: Drive motor
- 17: U-shaped beam
- 18: Wrapping arm
- 19: Film dispensing device
- 20: Wrapping table
- 21: Wrapping rollers
- 22: Sensor
- 23: Rotary axis
- 24: Film roll
- M1: Film centre
- M2: Film centre
- D1: Rotary axis
- D2: Rotary axis
- F1: Height setting
- F2: Width setting

## Claims

1. A bale wrapper for wrapping pressed bales that are made of hay, straw, silage or similar stalk-type products, comprising a wrapping table on which a bale is rotatable on a horizontal axis, and comprising a supporting frame that comprises at least one wrapping arm which by means of a drive motor is rotatable on a vertical rotary axis, with the ends of said wrapping arm comprising at least one film dispensing device for accommodating at least one film roll,
**characterised by**
at least one sensor (11, 22) that is equipped to generate information relating to the diameter of a bale (5,5') that is present on the wrapping table (20) and means for setting of the vertical and/or horizontal position of the wrapping arm (18), depending on the bale diameter of the bale (5,5') that is present on the wrapping table (20) for the purpose of being wrapped.

2. The bale wrapper according to claim 1,
**characterised in that**
setting the position of the wrapping arm (18), takes place such that the film centre (M1, M2) of the film roll (24) is situated on the horizontal rotary axis (D1, D2) of the bale (5, 5') to be wrapped.

3. The bale wrapper according to at least one of the preceding claims,
**characterised in that**
setting of the wrapping arm (18), takes place automatically or manually by the operator of the bale wrapper (14).

4. The bale wrapper according to at least one of the preceding claims,
**characterised in that**
for setting the vertical and/or horizontal position of the wrapping arm (18), the height (F1) and/or the width (F2) of the wrapping arm (18) are/is settable.

5. The bale wrapper according to at least one of the preceding claims,
**characterised in that**
the wrapping arm (18), is designed to be vertically and/or horizontally telescoping.

6. The bale wrapper according to at least one of the preceding claims,
**characterised in that**
the sensor (22) is equipped to register in a non-contacting manner the position of the outer surface of the bale (5, 5') that is present on the wrapping table (20), and to determine the average diameter of the bale.

7. The bale wrapper according to at least one of the preceding claims,
**characterised In that**
the sensor (22) is arranged on the underside of the wrapping arm (18), underneath its rotary axis (23).

8. The bale wrapper according to at least one of the preceding claims
**characterised in that**
the sensor (22) is designed as an ultrasound distance meter (12).

9. The bale wrapper according to at least one of the preceding claims,
**characterised in that**
by means of an output signal, generated by the sensor (11, 12, 22) in a control and evaluation unit, the diameter of the bale (5, 5') is determined; the control and evaluation unit, corresponding to the output signal generated, determines the horizontal rotary axis (D1, D2) of the bale (5, 5') that Is present on the wrapping table (20), and transmits signals to final control means that are in effective communication with the wrapping arm (18), which control means position the film centre (M1, M2) of the film roll (24) on the horizontal rotary axis (D1, D2) of the bale (5, 5') that is present on the wrapping table (20).

10. The bale wrapper according to claim 9,
**characterised in that**
the final control means are designed as hydraulic cylinders or as electronic linear motors.

11. The bale wrapper according to any one of claims 9 or 10
**characterised in that**
the control and evaluation device is equipped to receive an external signal to determine the diameter of the bale (5, 5') to be wrapped.

## Patentansprüche

1. Ballenwickelgerät zum Umwickeln gepresster Ballen, welche aus Heu, Stroh, Silage oder ähnlichen halmartigen Produkten hergestellt werden, umfassend einen Wickeltisch, auf welchem ein Ballen drehbar um eine horizontale Achse liegt, und umfassend einen Tragerahmen, welcher wenigstens einen Wickelarm umfasst, welcher mittels eines Antriebsmotors um eine vertikale Achse drehbar ist, wobei die Enden des Wickelarms wenigstens eine Folien ausgebende Vorrichtung zur Aufnahme wenigstens einer Folienrolle umfasst,
**gekennzeichnet durch**
wenigstens einen Sensor (11, 22), welcher vorgesehen ist, um Information in Bezug auf den Durchmesser eines Ballens (5, 5') zu erzeugen, welcher auf dem Wickeltisch (20) vorhanden ist, und **durch** Mittel zum Einstellen der vertikalen und/oder horizontalen Position des Wickelarms (18) in Abhängigkeit vom Ballendurchmesser des Ballens (5, 5'), welcher auf dem Wickeltisch (20) vorhanden ist, um umwickelt zu werden.

2. Ballenwickelgerät nach Anspruch 1,
**dadurch gekennzeichnet, dass**
das Einstellen der Position des Wickelarms (18) so erfolgt, dass die Folienmitte (M1, M2) der Folienrolle (24) auf der horizontalen Drehachse (D1, D2) des Ballens (5, 5'), welcher umwickelt werden soll, angeordnet ist.

3. Ballenwickelgerät nach wenigstens einem der vorangehenden Ansprüche,
**dadurch gekennzeichnet, dass**
das Einstellen der Position des Wickelarms (18) automatisch oder manuell durch den Arbeiter am Ballenwickelgerät (14) erfolgt.

4. Ballenwickelgerät nach wenigstens einem der vorangehenden Ansprüche,
**dadurch gekennzeichnet, dass**
für das Einstellen der vertikalen und/oder horizontalen Position des Wickelarms (18) die Höhe (F1) und/oder die Breite (F2) des Wickelarms (18) einstellbar sind/ist.

5. Ballenwickelgerät nach wenigstens einem der vorangehenden Ansprüche,
**dadurch gekennzeichnet, dass**
der Wickelarm (18) so gestaltet ist, um vertikal und/oder horizontal teleskopisch ausziehbar zu sein.

6. Ballenwickelgerät nach wenigstens einem der vorangehenden Ansprüche,
**dadurch gekennzeichnet, dass**
der Sensor (22) so ausgestattet ist, um auf eine berührungslose Weise die Position der äußeren Oberfläche des Ballens (5, 5'), welcher auf dem Wickeltisch (20) vorhanden ist, zu erfassen und den durchschnittlichen Durchmesser des Ballens zu bestimmen.

7. Ballenwickelgerät nach wenigstens einem der vorangehenden Ansprüche,
**dadurch gekennzeichnet, dass**
der Sensor (22) auf der Unterseite des Wickelarms (18) unterhalb seiner Drehachse (23) angeordnet ist.

8. Ballenwickelgerät nach wenigstens einem der vorangehenden Ansprüche,
**dadurch gekennzeichnet, dass**
der Sensor (22) als ein Ultraschallabstandsmesser (12) gestaltet ist.

9. Ballenwickelgerät nach wenigstens einem der vorangehenden Ansprüche,
**dadurch gekennzeichnet, dass**
mittels eines Ausgabesignals, welches durch den Sensor (11, 12, 22) in einer Steuer- und Auswertungseinheit der Durchmesser des Ballens (5, 5') bestimmt wird; wobei die Steuer- und Auswertungseinheit entsprechend dem erzeugten Ausgabesignal die horizontale Drehachse (D1, D2) des Ballens (5, 5'), welcher auf dem Wickeltisch (20) vorhanden ist, bestimmt und Signale an die abschließenden Steuermittel absetzt, welche sich in wirksamer Kommunikation mit dem Wickelarm (18) befinden, wobei die Steuermittel die Folienmitte (M1, M2) der Folienrolle (24) auf der horizontalen Drehachse (D1, D2) des Ballens (5, 5'), welcher auf dem Wickeltisch (20) vorhanden ist, positionieren.

10. Ballenwickelgerät nach Anspruch 9,
**dadurch gekennzeichnet, dass**
die abschließenden Steuermittel als Hydraulikzylinder oder als elektronische Linearmotoren gestaltet sind.

11. Ballenwickelgerät nach jedem beliebigen der Ansprüche 9 oder 10,
**dadurch gekennzeichnet, dass**
die Steuer- und Auswertungsvorrichtung so ausgestattet ist, um ein externes Signal zu empfangen, um den Durchmesser des Ballens (5, 5'), welcher umwickelt werden soll, zu bestimmen.

## Revendications

1. Enrubanneuse pour envelopper des balles pressées de foin, de paille, d'ensilage ou autres produits similaires du type en tiges, comprenant une table d'enrubannage sur laquelle une balle peut tourner sur un axe horizontal, et comprenant un châssis de support qui comporte au moins un bras d'enrubannage qui, à l'aide d'un moteur d'entraînement, peut tourner sur un axe de rotation vertical, les extrémité dudit bras d'enrubannage comportant au moins un dispositif de distribution de film destiné à recevoir au moins un rouleau de film,
**caractérisé par**
au moins un capteur (11, 22) équipé pour produire des informations concernant le diamètre d'une balle (5, 5') présente sur la table d'enrubannage (20) et des moyens pour régler la position verticale et/ou horizontale du bras d'enrubannage (18) d'après le diamètre de la balle (5, 5') présente sur la table d'enrubannage (20) afin d'y être enveloppée.

2. Enrubanneuse selon la revendication 1,
**caractérisée en ce que**
le réglage de la position du bras d'enrubannage (18) s'effectue de façon que le centre (M1, LM2) du film du rouleau (24) de film soit situé sur l'axe de rotation horizontal (D1, D2) de la balle à envelopper.

3. Enrubanneuse selon au moins une des revendications précédentes,
**caractérisée en ce que**
le réglage du bras d'enrubannage s'effectue de manière automatique ou manuellement par le conducteur de l'enrubanneuse (14).

4. Enrubanneuse selon au moins une des revendications précédentes,
**caractérisée en ce que**
pour régler la position verticale et/ou horizontale du bras d'enrubannage (18), la hauteur (F1) et/ou la largeur (F2) du bras d'enrubannage (18) sont/est réglable.

5. Enrubanneuse selon au moins une des revendications précédentes,
**caractérisée en ce que**
le bras d'enrubannage (18) est conçu pour être télescopique horizontalement et/ou verticalement.

6. Enrubanneuse selon au moins une des revendications précédentes,
**caractérisée en ce que**
le capteur (22) est équipé pour enregistrer d'une manière sans contact la position de la surface extérieure de la balle (5, 5') présente sur la table d'enrubannage (20) et pour déterminer le diamètre moyen de la balle.

7. Enrubanneuse selon au moins une des revendications précédentes,
**caractérisée en ce que**
le capteur (22) est installé sur la face inférieure du bras d'enrubannage (18), sous son axe de rotation (23).

8. Enrubanneuse selon au moins une des revendications précédentes,
**caractérisée en ce que**
le capteur (22) est conçu sous la forme d'un dispositif (12) à infrarouges pour la mesure de distances.

9. Enrubanneuse selon au moins une des revendications précédentes,
**caractérisée en ce que**
à l'aide d'un signal de sortie, généré par le capteur (11, 12, 22), dans un système de commande et d'évaluation, le diamètre de la bale (5, 5') est déterminé ; le système de commande et d'évaluation, en fonction du signal de sortie généré, détermine l'axe de rotation horizontal (D1, D2) de la balle (5, 5') présente sur la table d'enrubannage (20) et transmet des signaux à des moyens de commande finale communiquant effectivement avec le bras d'enrubannage (18), lesquels moyens de commande placent le centre (M1, M2) du film du rouleau (24) de film sur l'axe de rotation horizontal (D1, D2) de la balle (5, 5') présente sur la table d'enrubannage (20).

10. Enrubanneuse selon la revendication 9,
**caractérisée en ce que**
les moyens de commande finale sont conçus sous la forme de vérins hydrauliques ou de moteurs électroniques linéaires.

11. Enrubanneuse selon l'une quelconque des revendications 9 et 10,
**caractérisée en ce que**
le dispositif de commande et d'évaluation est équipé pour recevoir un signal extérieur afin de déterminer le diamètre de la balle (5, 5') à envelopper.
